# EUROPEAN PATENT APPLICATION

(11) **EP 4 250 436 A1**
(43) Date of publication of application: **27.09.2023**
(21) Application number: 21955578.6
(22) Date of filing: 06.09.2021
(51) Int. Cl.: H01M 10/615, H01M 10/625, B60L 58/27, B60L 58/10

(54) **BATTERY HEATING DEVICE, AND CONTROL METHOD, CONTROL CIRCUIT AND POWER DEVICE THEREFOR**

(71) Applicant: Contemporary Amperex Technology Co., Limited, Fujian PRC 352100 (CN)
(72) Inventor: HUANG, Xiaojian, Ningde, Fujian 352100 (CN); DAN, Zhimin, Ningde, Fujian 352100 (CN); HOU, Yizhen, Ningde, Fujian 352100 (CN); ZHANG, Wei, Ningde, Fujian 352100 (CN)
(74) Representative: Gong, Jinping
(86) International application number: PCT/CN2021/116735
(87) International publication number: WO 2023/029047

(57) **Abstract**

A battery heating apparatus (110), a control method and control circuit (800) thereof, and a motive apparatus (900) are provided. The battery heating apparatus (110) is configured to be connected to a traction battery (120) and heat the traction battery (120). The battery heating apparatus (110) includes: a heating module (1110) including a first leg (1111), a second leg (1112), and an energy storage element (1113); and a control module (1120) configured to control the first leg (1111) and the second leg (1112) to form a loop via which the traction battery (120) discharges to the energy storage element (1113) and a loop via which the energy storage element (1113) charges the traction battery (120), so as to heat the traction battery (120) during discharge and charge.

## Description

### TECHNICAL FIELD

This application relates to the field of battery technologies, and in particular, to a battery heating apparatus, a control method of battery heating apparatus, a control circuit of battery heating apparatus, and a motive apparatus.

### BACKGROUND

Traction batteries, with their advantages such as high energy density, support of cyclic charging, safety, and environmental friendliness, have been widely used in new energy vehicles, consumer electronics, energy storage systems, and other fields.

However, in low-temperature environments, use of traction batteries is limited to some extent. In particular, in low-temperature environments, their discharge capacity severely degrades, and the batteries are unable to be charged. Therefore, for proper use of traction batteries, it is necessary to heat them in low-temperature environments.

A conventional heating method is to heat a traction battery by using a motor. Therefore, in the process of heating the battery, the motor cannot drive a vehicle to run, that is, the motor cannot implement heating in driving.

### SUMMARY

Embodiments of this application provide a battery heating apparatus, a control method of battery heating apparatus, a control circuit of battery heating apparatus, and a motive apparatus, which can implement heating in driving.

According to a first aspect, a battery heating apparatus is provided and configured to be connected to a traction battery and heat the traction battery. The battery heating apparatus includes:
a heating module including a first leg, a second leg, and an energy storage element; and
a control module configured to control the first leg and the second leg to form a loop via which the traction battery discharges to the energy storage element and a loop via which the energy storage element charges the traction battery, so as to heat the traction battery during discharge and charge.

In this embodiment of this application, the battery heating apparatus includes two legs and the energy storage element. The two legs are controlled to form the loop via which the traction battery discharges to the energy storage element and the loop via which the energy storage element charges the traction battery, so as to heat the traction battery during discharge and charge. When the battery heating apparatus is configured to heat the traction battery, a motor can drive a vehicle to run as normal, thereby implementing heating in driving.

In a possible implementation, a first terminal of the first leg, a first terminal of the second leg, and a first terminal of the traction battery are connected, and a second terminal of the first leg, a second terminal of the second leg, and a second terminal of the traction battery are connected; the first leg includes a first sub-leg and a second sub-leg, and the second leg includes a third sub-leg and a fourth sub-leg; and a first terminal of the energy storage element is connected between the first sub-leg and the second sub-leg, and a second terminal of the energy storage element is connected between the third sub-leg and the fourth sub-leg.

In a possible implementation, the first sub-leg includes a first tube switch and a first freewheeling diode connected in parallel to the first tube switch; the second sub-leg includes a second tube switch and a second freewheeling diode connected in parallel to the second tube switch; the third sub-leg includes a third tube switch and a third freewheeling diode connected in parallel to the third tube switch; and the fourth sub-leg includes a fourth tube switch and a fourth freewheeling diode connected in parallel to the fourth tube switch.

In a possible implementation, the control module is specifically configured to:
control the first tube switch and the fourth tube switch to turn on and the second tube switch and the third tube switch to turn off, so as to form a loop including the traction battery, the first tube switch, the energy storage element, and the fourth tube switch for the traction battery to discharge to the energy storage element; and control the first tube switch, the second tube switch, the third tube switch, and the fourth tube switch to turn off, so as to form a loop including the traction battery, the second freewheeling diode, the energy storage element, and the third freewheeling diode for the energy storage element to charge the traction battery; and/or
control the second tube switch and the third tube switch to turn on and the first tube switch and the fourth tube switch to turn off, so as to form a loop including the traction battery, the third tube switch, the energy storage element, and the second tube switch for the traction battery to discharge to the energy storage element; and control the first tube switch, the second tube switch, the third tube switch, and the fourth tube switch to turn off, so as to form a loop including the traction battery, the fourth freewheeling diode, the energy storage element, and the first freewheeling diode for the energy storage element to charge the traction battery.

In this embodiment, proper control timing is designed to control the sub-legs to turn on or off, so as to form the loop via which the traction battery discharges to the energy storage element and the loop via which the energy storage element charges the traction battery. The discharge loop and the charge loop switch back and forth, so as to perform charge and discharge repeatedly between the traction battery and the energy storage element, thereby heating the battery during charge and discharge.

In a possible implementation, the battery heating apparatus is further connected to a charging apparatus, and the charging apparatus is configured to charge the traction battery via the battery heating apparatus. The control module is further configured to: when voltage of the charging apparatus is lower than voltage of the traction battery, control the first leg and the second leg to form a loop via which the charging apparatus charges the energy storage element and a loop via which the charging apparatus and the energy storage element charge the traction battery simultaneously; or when voltage of the charging apparatus is higher than voltage of the traction battery, control the first leg and the second leg to form a loop via which the charging apparatus charges the traction battery and the energy storage element and a loop via which the energy storage element charges the traction battery.

In this embodiment of this application, the battery heating apparatus has both a heating mode and a charge mode, and can not only be used for heating the traction battery, but also function as a voltage regulation unit to be used in the process of charging the traction battery by the charging apparatus. In this way, when the voltage of the charging apparatus does not match the voltage of the traction battery, for example, when the voltage of the charging apparatus is lower than or higher than the voltage of the traction battery, the charging apparatus can charge the traction battery at a boosted voltage or at a stepped-down voltage via the battery heating apparatus, so as to improve adaptability between the charging apparatus and the traction battery.

In a possible implementation, the second terminal of the energy storage element is connected to one terminal of the charging apparatus through a fifth tube switch, the second terminal of the second leg is connected to another terminal of the charging apparatus, and the charging apparatus is configured to charge the traction battery via the heating module. The control module is further configured to: control the third sub-leg to turn off; when the voltage of the charging apparatus is lower than the voltage of the traction battery, control the second tube switch and the fifth tube switch to turn on and the first tube switch and the fourth tube switch to turn off, so as to form a loop including the charging apparatus, the energy storage element, and the second tube switch for the charging apparatus to charge the energy storage element; and control the first tube switch and the fifth tube switch to turn on and the second tube switch and the fourth tube switch to turn off, so as to form a loop including the charging apparatus, the energy storage element, the first tube switch, and the traction battery for the charging apparatus and the energy storage element to charge the traction battery simultaneously.

In this embodiment, when the voltage of the charging apparatus is lower than the voltage of the traction battery, proper control timing is designed to control the sub-legs to turn on or off, so as to form, in each charge period, a stage in which the charging apparatus charges the energy storage element and a stage in which the charging apparatus and the energy storage element charge the traction battery simultaneously. In this way, when the charging apparatus charges the energy storage element, with power stored in the energy storage element, the energy storage element can charge the traction battery together with the charging apparatus, so as to reduce a voltage difference between the charging apparatus and the traction battery, thereby improving charge efficiency.

In a possible implementation, the control module is further configured to: when the voltage of the charging apparatus is lower than the voltage of the traction battery, control the first tube switch and the fifth tube switch to turn on and the second tube switch and the fourth tube switch to turn off, so as to form a loop including the charging apparatus, the energy storage element, the first tube switch, and the traction battery for the charging apparatus to charge the traction battery and the energy storage element; and control the first tube switch to turn on and the second tube switch, the fourth tube switch, and the fifth tube switch to turn off, so as to form a loop including the energy storage element, the first tube switch, the traction battery, and the fourth freewheeling diode for the energy storage element to charge the traction battery.

In this embodiment, when the voltage of the charging apparatus is higher than the voltage of the traction battery, proper control timing is designed to control the sub-legs to turn on or off, so as to form, in each charge period, a stage in which the charging apparatus charges the energy storage element and the traction battery and a stage in which only the energy storage element charges the traction battery. In this way, when the charging apparatus charges the energy storage element, with power stored in the energy storage element, the energy storage element can charge the traction battery alone, so as to reduce continuous charge of the traction battery by the charging apparatus at high voltage, thereby improving charging safety.

In a possible implementation, the energy storage element includes an inductor; or the energy storage element includes an inductor and a first capacitor connected in series.

In a possible implementation, a second capacitor is further connected in parallel to two terminals of the traction battery. The second capacitor can implement functions such as voltage stabilization, thereby improving voltage stability of the traction battery.

In a possible implementation, the traction battery is further connected to a drive circuit of a motor and configured to supply power to the drive circuit. It can be seen that when the battery heating apparatus is configured to heat the traction battery, the traction battery can supply power to the drive circuit of the motor connected to the traction battery, so as to heat the traction battery in driving.

According to a second aspect, a control method of battery heating apparatus is provided. The battery heating apparatus is connected to a traction battery and configured to heat the traction battery, and the battery heating apparatus includes a first leg, a second leg, and an energy storage element. The control method includes:
controlling the first leg and the second leg to form a loop via which the traction battery discharges to the energy storage element and a loop via which the energy storage element charges the traction battery, so as to heat the traction battery during discharge and charge.

In this embodiment of this application, proper control timing is designed to control two legs in the battery heating apparatus to form the loop via which the traction battery discharges to the energy storage element and the loop via which the energy storage element charges the traction battery, so as to heat the traction battery during discharge and charge. When the battery heating apparatus is configured to heat the traction battery, a motor can drive a vehicle to run as normal, thereby implementing heating in driving.

In a possible implementation, a first terminal of the first leg, a first terminal of the second leg, and a first terminal of the traction battery are connected, and a second terminal of the first leg, a second terminal of the second leg, and a second terminal of the traction battery are connected; the first leg includes a first sub-leg and a second sub-leg, and the second leg includes a third sub-leg and a fourth sub-leg; and a first terminal of the energy storage element is connected between the first sub-leg and the second sub-leg, and a second terminal of the energy storage element is connected between the third sub-leg and the fourth sub-leg.

In a possible implementation, the first sub-leg includes a first tube switch and a first freewheeling diode connected in parallel to the first tube switch; the second sub-leg includes a second tube switch and a second freewheeling diode connected in parallel to the second tube switch; the third sub-leg includes a third tube switch and a third freewheeling diode connected in parallel to the third tube switch; and the fourth sub-leg includes a fourth tube switch and a fourth freewheeling diode connected in parallel to the fourth tube switch.

In a possible implementation, the controlling the first leg, the second leg, and the traction battery includes: receiving a heating request message; and generating a first control signal according to the heating request message, where the first control signal is used to:
control the first tube switch and the fourth tube switch to turn on and the second tube switch and the third tube switch to turn off, so as to form a loop including the traction battery, the first tube switch, the energy storage element, and the fourth tube switch for the traction battery to discharge to the energy storage element; and control the first tube switch, the second tube switch, the third tube switch, and the fourth tube switch to turn off, so as to form a loop including the traction battery, the second freewheeling diode, the energy storage element, and the third freewheeling diode for the energy storage element to charge the traction battery; and/or
control the second tube switch and the third tube switch to turn on and the first tube switch and the fourth tube switch to turn off, so as to form a loop including the traction battery, the third tube switch, the energy storage element, and the second tube switch for the traction battery to discharge to the energy storage element; and control the first tube switch, the second tube switch, the third tube switch, and the fourth tube switch to turn off, so as to form a loop including the traction battery, the fourth freewheeling diode, the energy storage element, and the first freewheeling diode for the energy storage element to charge the traction battery.

In this embodiment, proper control timing is designed to control the sub-legs to turn on or off, so as to form the loop via which the traction battery discharges to the energy storage element and the loop via which the energy storage element charges the traction battery. The discharge loop and the charge loop switch back and forth, so as to perform charge and discharge repeatedly between the traction battery and the energy storage element, thereby heating the battery during charge and discharge.

In a possible implementation, the control method further includes: receiving a heating stopping message; and generating a second control signal according to the heating stopping message, where the second control signal is used to control the battery heating apparatus to stop heating the traction battery.

In a possible implementation, the battery heating apparatus is further connected to a charging apparatus, and the charging apparatus is configured to charge the traction battery via the battery heating apparatus. The control module is further configured to: when voltage of the charging apparatus is lower than voltage of the traction battery, control the first leg and the second leg to form a loop via which the charging apparatus charges the energy storage element and a loop via which the charging apparatus and the energy storage element charge the traction battery simultaneously; or when voltage of the charging apparatus is higher than voltage of the traction battery, control the first leg and the second leg to form a loop via which the charging apparatus charges the traction battery and the energy storage element and a loop via which the energy storage element charges the traction battery.

In this embodiment of this application, the battery heating apparatus has both a heating mode and a charge mode, and can not only be used for heating the traction battery, but also function as a voltage regulation unit to be used in the process of charging the traction battery by the charging apparatus. In this way, when the voltage of the charging apparatus does not match the voltage of the traction battery, for example, when the voltage of the charging apparatus is lower than or higher than the voltage of the traction battery, the charging apparatus can charge the traction battery at a boosted voltage or at a stepped-down voltage via the battery heating apparatus, so as to improve adaptability between the charging apparatus and the traction battery.

In a possible implementation, the second terminal of the energy storage element is connected to one terminal of the charging apparatus through a fifth tube switch, the second terminal of the second leg is connected to another terminal of the charging apparatus, and the charging apparatus is configured to charge the traction battery via the heating module. The control method further includes: controlling the third sub-leg to turn off; when the voltage of the charging apparatus is lower than the voltage of the traction battery, controlling the second tube switch and the fifth tube switch to turn on and the first tube switch and the fourth tube switch to turn off, so as to form a loop including the charging apparatus, the energy storage element, and the second tube switch for the charging apparatus to charge the energy storage element; and controlling the first tube switch and the fifth tube switch to turn on and the second tube switch and the fourth tube switch to turn off, so as to form a loop including the charging apparatus, the energy storage element, the first tube switch, and the traction battery for the charging apparatus and the energy storage element to charge the traction battery simultaneously.

In this embodiment, when the voltage of the charging apparatus is lower than the voltage of the traction battery, proper control timing is designed to control the sub-legs to turn on or off, so as to form, in each charge period, a stage in which the charging apparatus charges the energy storage element and a stage in which the charging apparatus and the energy storage element charge the traction battery simultaneously. In this way, when the charging apparatus charges the energy storage element, with power stored in the energy storage element, the energy storage element can charge the traction battery together with the charging apparatus, so as to reduce a voltage difference between the charging apparatus and the traction battery, thereby improving charge efficiency.

In a possible implementation, the control method further includes: when the voltage of the charging apparatus is higher than the voltage of the traction battery, controlling the first tube switch and the fifth tube switch to turn on and the second tube switch and the fourth tube switch to turn off, so as to form a loop including the charging apparatus, the energy storage element, the first tube switch, and the traction battery for the charging apparatus to charge the traction battery and the energy storage element; and controlling the first tube switch to turn on and the second tube switch, the fourth tube switch, and the fifth tube switch to turn off, so as to form a loop including the energy storage element, the first tube switch, the traction battery, and the fourth freewheeling diode for the energy storage element to charge the traction battery.

In this embodiment, when the voltage of the charging apparatus is higher than the voltage of the traction battery, proper control timing is designed to control the sub-legs to turn on or off, so as to form, in each charge period, a stage in which the charging apparatus charges the energy storage element and the traction battery and a stage in which only the energy storage element charges the traction battery. In this way, when the charging apparatus charges the energy storage element, with power stored in the energy storage element, the energy storage element can charge the traction battery alone, so as to reduce continuous charge of the traction battery by the charging apparatus at high voltage, thereby improving charging safety.

In a possible implementation, the energy storage element includes an inductor; or the energy storage element includes an inductor and a first capacitor connected in series.

In a possible implementation, a second capacitor is further connected in parallel to two terminals of the traction battery. The second capacitor can implement functions such as voltage stabilization, thereby improving voltage stability of the traction battery.

In a possible implementation, the traction battery is further connected to a drive circuit of a motor and configured to supply power to the drive circuit. It can be seen that when the battery heating apparatus is configured to heat the traction battery, the traction battery can supply power to the drive circuit of the motor connected to the traction battery, so as to heat the traction battery in driving.

According to a third aspect, a control circuit of battery heating apparatus is provided and includes a processor, where the processor is configured to perform the method according to any one of the second aspect or the possible implementations of the second aspect.

According to a fourth aspect, a motive apparatus is provided, including: a traction battery; the battery heating apparatus according to any one of the first aspect or the possible implementations of the first aspect, where the battery heating apparatus is connected to the traction battery and configured to heat the traction battery; and a motor, where a drive circuit of the motor is connected to the traction battery, and the traction battery is configured to supply power to the drive circuit.

Based on the foregoing technical solutions, an additional battery heating apparatus is provided, so that when such battery heating apparatus is configured to heat the traction battery, a motor can drive a vehicle to run as normal, thereby implementing heating in driving. Specifically, proper control timing is designed to control the legs in the battery heating apparatus, so as to form a loop via which the traction battery discharges to the energy storage element in the battery heating apparatus and a loop via which the energy storage element charges the traction battery, thereby heating the traction battery by effectively using the energy storage element.

### BRIEF DESCRIPTION OF DRAWINGS

To describe the technical solutions of the embodiments of this application more clearly, the following briefly describes the accompanying drawings required for describing the embodiments of this application. Apparently, the accompanying drawings described below show merely some embodiments of this application, and persons of ordinary skill in the art may still derive other drawings from the accompanying drawings without creative efforts.
FIG. 1 is a schematic diagram of an application scenario of a battery heating apparatus according to an embodiment of this application.
FIG. 2 is a schematic block diagram of a battery heating apparatus according to an embodiment of this application.
FIG. 3 is a schematic diagram of a possible implementation of the battery heating apparatus shown in FIG. 2.
FIG. 4 is a schematic diagram of another possible implementation of the battery heating apparatus shown in FIG. 2.
FIG. 5 is a schematic diagram of another possible implementation of the battery heating apparatus shown in FIG. 2.
FIG. 6 is a schematic diagram of another possible implementation of the battery heating apparatus shown in FIG. 2.
FIG. 7 is a schematic flowchart of a control method of battery heating apparatus according to an embodiment of this application.
FIG. 8 is a schematic block diagram of a control circuit of battery heating apparatus according to an embodiment of this application.
FIG. 9 is a schematic block diagram of a motive apparatus according to an embodiment of this application.

### DESCRIPTION OF EMBODIMENTS

The following further describes the embodiments of this application in detail with reference to the accompanying drawings and implementations. The detailed description of embodiments and the accompanying drawings are intended to illustrate the principle of this application, rather than to limit the scope of this application, meaning this application is not limited to the embodiments described herein.

In the description of this application, it should be noted that, unless otherwise stated, "a plurality of" means at least two; and the orientations or positional relationships indicated by the terms "upper", "lower", "left", "right", "inside", "outside", and the like are merely for ease and brevity of description of this application rather than indicating or implying that the apparatuses or components mentioned must have specific orientations or must be constructed or manipulated according to specific orientations. These terms shall therefore not be construed as limitations on this application. In addition, the terms "first", "second", "third", and the like are merely intended for a purpose of description, and shall not be understood as any indication or implication of relative importance. "Perpendicular" is not perpendicular in the strict sense but within an allowable range of error. "Parallel" is not parallel in the strict sense but within an allowable range of error.

The orientation terms appearing in the following description all refer to the orientations shown in the drawings and do not limit the specific structure of this application. In the description of this application, it should also be noted that, unless otherwise specified and defined explicitly, the terms "mount", "connect", and "join" should be understood in their general senses. For example, they may refer to a fixed connection, a detachable connection, or an integral connection, and may refer to a direct connection or an indirect connection via an intermediate medium. Persons of ordinary skill in the art can understand specific meanings of these terms in this application as appropriate to specific situations.

With the development over time, new energy vehicles, with their advantages such as environment friendliness, low noise, and low use costs, have great market prospects and can effectively promote energy conservation and emission reduction, which is conducive to the development and progress of society.

Due to the electrochemical characteristics of traction batteries, charging and discharging capacity of the traction batteries is greatly limited in low-temperature environments, which severely affects user experience of vehicles in winter. Therefore, for proper use of traction batteries, it is necessary to heat them up in low-temperature environments.

The traction battery in the embodiments of this application may be a lithium-ion battery, a lithium metal battery, a lead-acid battery, a nickel-cadmium battery, a nickel-metal hydride battery, a lithium-sulfur battery, a lithium-air battery, a sodium-ion battery, or the like. This is not limited herein. In terms of scale, the traction battery in the embodiments of this application may be a battery cell, or may be a battery module or a battery pack. This is not limited herein. In terms of application scenarios, the traction battery can be used in motive apparatuses such as an automobile and a ship. For example, the traction battery can be used in a motorized vehicle to power a motor of the motorized vehicle as a power source for the electric vehicle. The traction battery can also supply power to other electric components in the electric vehicle, for example, a vehicular air conditioner or a vehicular player.

For ease of description, the following describes the solution of this application by using an example in which the traction battery is applied to a new energy vehicle (that is, a motorized vehicle, or referred to as an electric vehicle).

A power system is one of core components of the motorized vehicle, and has a drive characteristic that determines a main performance indicator of the vehicle in driving. A power system of the motorized vehicle mainly includes an electromotor, namely, a motor, a power converter, a drive circuit such as an inverter, various detection sensors, a power supply, and the like. A motor is a rotary electromagnetic machine that operates on an electromagnetic induction principle and is configured to convert electrical energy into mechanical energy. In operating, the motor takes electric power from an electric system, and outputs mechanical power to a mechanical system.

A conventional method is to heat a traction battery by using a motor. Therefore, in the process of heating the battery, the motor cannot drive a vehicle to run, that is, the motor cannot implement heating in driving, greatly limiting the scenario of heating the battery. In addition, when the motor is used to heat the traction battery, it is also likely to cause a problem that the motor vibrates so much as to produce excessive noise excessive noise, thus affecting the user experience in using the motorized vehicle. In addition, frequent operation of the motor may affect the service life of the motor.

In view of this, this application provides a solution for heating the traction battery, which can implement heating in driving and resolve the problem that the motor vibrates so much as to produce excessive noise and affects the service life of the motor in the foregoing conventional heating method.

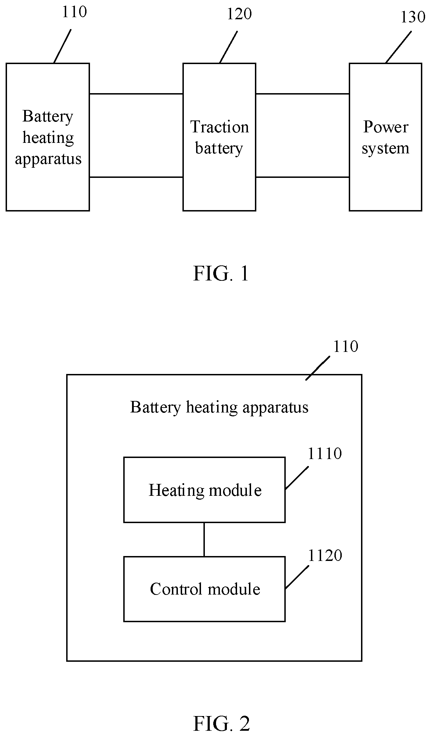

FIG. 1 is a schematic diagram of an application scenario of a battery heating apparatus according to an embodiment of this application. As shown in FIG. 1, a battery heating apparatus 110 is connected to a traction battery 120, and the battery heating apparatus 110 is configured to heat the traction battery 120. For example, a power system 130 includes a motor, where a drive circuit of the motor is connected to the traction battery 120, and the traction battery 120 is configured to supply power to the drive circuit of the motor, thereby ensuring that a motorized vehicle runs as normal. In this embodiment of this application, when the battery heating apparatus 110 heats the traction battery 120, normal operation of the power system 130 is not affected. Therefore, heating in driving can be implemented.

In an implementation, a battery management system (Battery Management System, BMS) of the traction battery 120 collects state information of the traction battery 120, such as battery temperature, state of charge (State of Charge, SOC), a voltage signal, and a current signal, and determines, based on the state information, whether the traction battery 120 needs to be heated. When it is determined that the traction battery 120 needs to be heated, the BMS can send a heating request to a vehicle control unit (Vehicle Control Unit, VCU). The VCU determines, based on the heating request sent by the BMS, whether to start the battery heating apparatus 110 to heat the traction battery 120.

For example, after receiving the heating request sent by the BMS, the VCU can determine, based on the SOC of the traction battery 120, whether to heat the traction battery 120 by using the battery heating apparatus 110. When a battery level of the traction battery 120 is sufficient, that is, the SOC is high, for example, the SOC is higher than a threshold, the battery heating apparatus 110 can be configured to heat the traction battery 120, without affecting normal driving of the motorized vehicle in this case.

For another example, when a battery level of the traction battery 120 is insufficient, that is, the SOC is low, for example, the SOC is lower than a threshold, to reduce heating loss of the battery, the battery heating apparatus 110 may not be configured to heat the traction battery. A motor control unit, for example, a microprogrammed control unit (Microprogrammed Control Unit, MCU), can determine a state of the motor based on information such as a voltage and a current of the motor and send the state of the motor to the VCU. Therefore, if the motor is in a normal operation state in this case, the heat produced due to operation loss of the motor can be used for heating or keeping warm the traction battery 120. For example, the heat produced due to the operation loss of the motor in driving is used for heating a cooling liquid of the traction battery 120, so that the cooling liquid heats or keeps warm the traction battery 120.

Alternatively, when the SOC of the traction battery 120 is low, the battery heating apparatus 110 can be started to heat the traction battery 120, and a length of a heating period of the battery heating apparatus 110 can be adjusted, or a heating frequency of the battery heating apparatus 110 can be adjusted.

Application scenarios of the battery heating apparatus 110 are not limited in this application. The battery heating apparatus 110 in this embodiment of this application can heat the traction battery 120 whenever needed.

In the process of heating the traction battery 120 by the battery heating apparatus 110, the BMS of the traction battery 120 can also monitor whether temperature of the traction battery 120 is abnormal. When the temperature of the traction battery 120 is abnormal, for example, there is a large temperature difference between different battery cells in the traction battery 120, the BMS can send temperature abnormality information to the VCU, and the VCU controls the battery heating apparatus 110 to stop heating the traction battery 120. In this case, the heat produced due to operation loss of the motor can be used for heating or keeping warm the traction battery 120. For example, the heat produced due to the operation loss of the motor is used for heating a cooling liquid of the traction battery 120, so that the cooling liquid heats or keeps warm the traction battery 120.

In the process of heating the traction battery 120 by the battery heating apparatus 110, if the temperature of the traction battery 120 has met the requirements, the VCU can control the battery heating apparatus 110 to stop heating the traction battery 120. In this case, the heat produced due to operation loss of the motor can be used for keeping warm the traction battery 120. For example, the heat produced due to the operation loss of the motor is used for heating a cooling liquid of the traction battery 120, so that the cooling liquid keeps warm the traction battery 120.

With reference to FIG. 2 to FIG. 5, the following describes a solution for heating the traction battery 120 by the battery heating apparatus 110 in this embodiment of this application.

FIG. 2 is a schematic block diagram of a battery heating apparatus 110 according to an embodiment of this application. As shown in FIG. 2, the battery heating apparatus 110 includes a heating module 1110 and a control module 1120.

The heating module 1110 includes a first leg 1111, a second leg 1112, and an energy storage element 1113. The energy storage element 1113 may be, for example, an inductor L, or an inductor L and a first capacitor connected together in series.

For example, a second capacitor C2 may alternatively be connected in parallel to two terminals of a traction battery 120. The second capacitor C2 can implement functions such as voltage stabilization, thereby reducing voltage fluctuation of the traction battery 120, and improving voltage stability of the traction battery 120. In this way, requirements of a motor control unit on sampling accuracy of the battery voltage in driving can be reduced.

The control module 1120 is configured to control the first leg 1111 and the second leg 1112 to form a loop via which the traction battery 120 discharges to the energy storage element 1113 and a loop via which the energy storage element 1113 charges the traction battery 120, so as to heat the traction battery during discharge and charge.

The control module 1120 may be a VCU or a control module relatively independent of the VCU, for example, a control module dedicated to the battery heating apparatus 110. This is not limited in this embodiment of this application.

It can be seen that when the battery heating apparatus 110 heats the traction battery 120, the control module 1120 needs to control the first leg 1111 and the second leg 1112 in the heating module 1110. The first leg 1111 and the second leg 1112 are controlled to turn on or off, so as to form a loop via which the traction battery 120 discharges to the energy storage element 1113 and a loop via which the energy storage element 1113 charges the traction battery 120. The discharge loop and the charge loop switch back and forth, so as to perform charge and discharge repeatedly between the traction battery 120 and the energy storage element 1113. Flowing of a current inside the battery during charge and discharge can increase the temperature of the battery to heat the battery.

In an implementation, a first terminal E11 of the first leg 1111, a first terminal of the second leg 1112, and a first terminal of the traction battery 120 are connected, and a second terminal E12 of the first leg 1111, a second terminal E22 of the second leg 1112, and a second terminal of the traction battery 120 are connected. The first leg 1111 includes a first sub-leg 1101 and a second sub-leg 1102, and the second leg 1112 includes a third sub-leg 1103 and a fourth sub-leg 1104. A first terminal of the energy storage element 1113 is connected between the first sub-leg 1101 and the second sub-leg 1102, and a second terminal of the energy storage element 1113 is connected between the third sub-leg 1103 and the fourth sub-leg 1104.

The first terminal of the traction battery 120 is a positive electrode of the traction battery 120, and the second terminal of the traction battery 120 is a negative electrode of the traction battery 120. Alternatively, the first terminal of the traction battery 120 is a negative electrode of the traction battery 120, and the second terminal of the traction battery 120 is a positive electrode of the traction battery 120.

Based on this circuit structure, when the traction battery 120 is heated, the control module 1120 can be configured to: control the first sub-leg 1101 and the fourth sub-leg 1104 to turn on simultaneously, so as to form a loop including the traction battery 120, the first sub-leg 1101, the energy storage element 1113, and the fourth sub-leg 1104 for the traction battery to discharge to the energy storage element 1113; and control the second sub-leg 1102 and the third sub-leg 1103 to turn on simultaneously, so as to form a loop including the traction battery 120, the second sub-leg 1102, the energy storage element 1113, and the third sub-leg 1103 for the energy storage element 1113 to charge the traction battery 120, thereby heating the traction battery 120 during discharge and charge.

Based on this circuit structure, when the traction battery 120 is heated, the control module 1120 can alternatively be configured to: control the second sub-leg 1102 and the third sub-leg 1103 to turn on simultaneously, so as to form a loop including the traction battery 120, the third sub-leg 1103, the energy storage element 1113, and the second sub-leg 1102 for the traction battery to discharge to the energy storage element 1113; and control the first sub-leg 1101 and the fourth sub-leg 1104 to turn on simultaneously, so as to form a loop including the traction battery 120, the fourth sub-leg 1104, the energy storage element 1113, and the first sub-leg 1101 for the energy storage element 1113 to charge the traction battery 120, thereby heating the traction battery 120 during discharge and charge.

The following describes in detail the process of heating the battery by using an example in which the first terminal of the traction battery 120 is a positive electrode of the traction battery, the second terminal of the traction battery is a negative electrode of the traction battery, and the energy storage element 1113 is the inductor L.

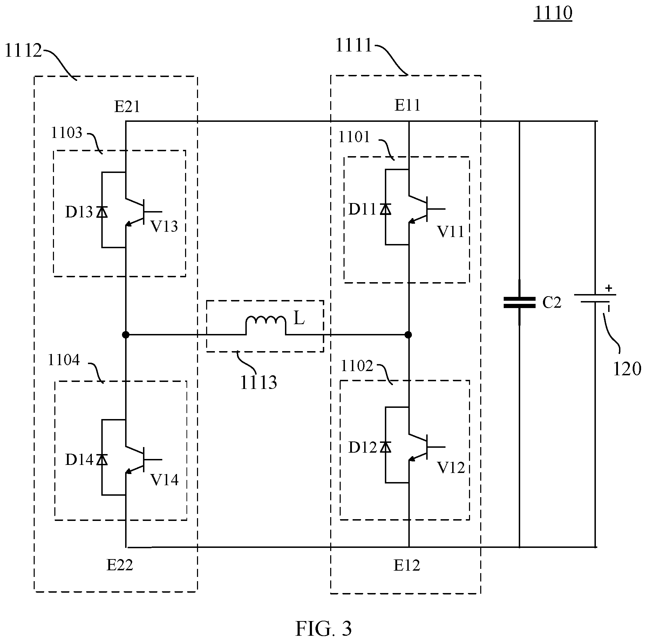

In an implementation, in the heating module 1110 shown in FIG. 3, the first sub-leg 1101 may include a first tube switch V11 and a first freewheeling diode D 11 connected in parallel to the first tube switch V11; the second sub-leg 1102 may include a second tube switch V12 and a second freewheeling diode D12 connected in parallel to the second tube switch V12; the third sub-leg 1103 may include a third tube switch V13 and a third freewheeling diode D13 connected in parallel to the third tube switch V13; and the fourth sub-leg 1104 may include a fourth tube switch V14 and a fourth freewheeling diode D14 connected in parallel to the fourth tube switch V14.

Freewheeling diodes are typically used together with inductors. An abrupt change of current flowing through the inductor leads to an abrupt change of voltage between two terminals of the inductor, which is likely to damage other elements in the circuit loop. When the inductor cooperates with a freewheeling diode, the current flowing through the inductor can change smoothly, which avoids the abrupt change of voltage, thereby improving safety of the circuit.

It should be understood that in some cases, the first tube switch V11 and first freewheeling diode D11 connected in parallel to the first tube switch V11, the second tube switch V12 and the second freewheeling diode D12 connected in parallel to the second tube switch V12, the third tube switch V13 and the third freewheeling diode D13 connected in parallel to the third tube switch V13, and the fourth tube switch V14 and the fourth freewheeling diode D14 connected in parallel to the fourth tube switch V14 may all be referred to as an insulated gate bipolar translator (Insulated Gate Bipolar Translator, IGBT).

In an implementation, using the heating module 1110 shown in FIG. 3 as an example, the control module 1120 (not shown in FIG. 3) is specifically configured to: control the first tube switch V11 and the fourth tube switch V 14 to turn on and the second tube switch V12 and the third tube switch V13 to turn off, so as to form a loop including the traction battery 120, the first tube switch V11, the inductor L, and the fourth tube switch V14 for the traction battery 120 to discharge to the inductor L; and control the first tube switch V11, the second tube switch V12, the third tube switch V13, and the fourth tube switch V14 to turn off, so as to form a loop including the traction battery 120, the second freewheeling diode D12, the inductor L, and the third freewheeling diode D13 for the inductor L to charge the traction battery 120.

In other words, each heating period may include a first stage and a second stage. In the first stage, the first tube switch V11 and the fourth tube switch V14 turn on and the second tube switch V12 and the third tube switch V13 turn off, that is, the first sub-leg 1101 and the fourth sub-leg 1104 turn on simultaneously, so as to form a loop including the traction battery 120, the first tube switch V11, the inductor L, and the fourth tube switch V14, where the loop is used by the traction battery 120 to discharge to the inductor L, and a discharge path is as follows: positive electrode of the battery→V11→L→V14→negative electrode of the battery. Then, in the second stage, the first tube switch V11 and the fourth tube switch V14 also turn off to form a loop including the traction battery 120, the second freewheeling diode D12, the inductor L, and the third freewheeling diode D13, where the loop is used by the inductor L to charge the traction battery 120, and a charge path is as follows: negative electrode of the battery→D12→L→D13→positive electrode of the battery.

Further, in another implementation, the control electric module 1120 is further configured to: control the second tube switch V12 and the third tube switch V13 to turn on and the first tube switch V11 and the fourth tube switch V14 to turn off, so as to form a loop including the traction battery 120, the third tube switch V13, the inductor L, and the second tube switch V12 for the traction battery 120 to discharge to the inductor L; and control the first tube switch V11, the second tube switch V12, the third tube switch V13, and the fourth tube switch V14 to turn off, so as to form a loop including the traction battery 120, the fourth freewheeling diode D14, the inductor L, and the first freewheeling diode D11 for the inductor L to charge the traction battery 120.

In this case, each heating period may include a first stage and a second stage, or may include a third stage and a fourth stage, or may include all of a first stage, a second stage, a third stage, and a fourth stage. In the third stage, the second tube switch V12 and the third tube switch V13 turn on and the first tube switch V11 and the fourth tube switch V14 turn off, that is, the second sub-leg 1102 and the third sub-leg 1103 turn on simultaneously, so as to form a loop including the traction battery 120, the third tube switch V13, the inductor L, and the second tube switch V12, where the loop is used by the traction battery 120 to discharge to the inductor L, and a discharge path is as follows: positive electrode of the battery→V13→L→V12→negative electrode of the battery. Then, in the fourth stage, the second tube switch V12 and the third tube switch V13 also turn off to form a loop including the traction battery 120, the fourth freewheeling diode D14, the inductor L, and the first freewheeling diode D11, where the loop is used by the inductor L to charge the traction battery 120, and a charge path is as follows: negative electrode of the battery→D14→L→D11→positive electrode of the battery.

In this way, proper control timing is designed to control the sub-legs to turn on or off, so as to form the loop via which the traction battery 120 discharges to the inductor L and the loop via which the inductor L charges the traction battery 120. The discharge loop and the charge loop switch back and forth, so as to perform charge and discharge repeatedly between the traction battery 120 and the inductor L, thereby persistently heating the battery.

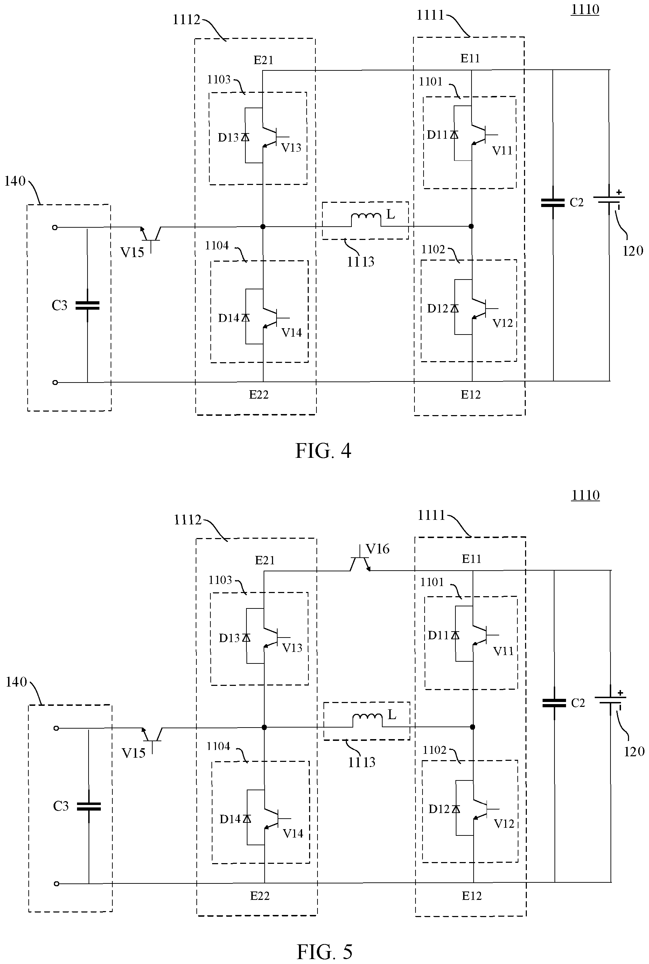

The foregoing describes the process of heating the traction battery 120 by the battery heating apparatus 110 in this application, that is, a heating mode of the battery heating apparatus 110. Different from that in a conventional method of heating the traction battery 120 by using the motor, the motor can operate as normal when the battery heating apparatus 110 heats the traction battery 120. Therefore, when the battery heating apparatus operates in the heating mode, normal driving of a vehicle with the traction battery 120 is not affected. The following describes, with reference to FIG. 4, a process of a charging apparatus 140 charging the traction battery 120 via the battery heating apparatus 110, that is, a charge mode of the battery heating apparatus 110. The charging apparatus 140 includes but is not limited to a charging pile or a charger. The battery heating apparatus 110 is connected to the charging apparatus 140, and the charging apparatus 140 is configured to charge the traction battery 120 via the battery heating apparatus 110.

The battery heating apparatus 110 has both a heating mode and a charge mode, and therefore, the battery heating apparatus 110 can not only be used for heating the traction battery 120, but also adjust charging voltage when the charging apparatus 140 charges the traction battery 120. In this way, when voltage of the charging apparatus 140 does not match voltage of the traction battery 120, for example, when the voltage of the charging apparatus 140 is lower than or higher than the voltage of the traction battery 120, the charging apparatus 140 can charge the traction battery 120 at a boosted voltage or at a stepped-down voltage via the battery heating apparatus 110, so as to improve adaptability between the charging apparatus 140 and the traction battery 120.

For example, when the voltage of the charging apparatus 140 is lower than the voltage of the traction battery 120, the control module 1120 controls the first leg 1111 and the second leg 1112 to form a loop via which the charging apparatus 140 charges the energy storage element 1113 and a loop via which the charging apparatus 140 and the energy storage element 1113 charge the traction battery 120 simultaneously.

For another example, when the voltage of the charging apparatus 140 is higher than the voltage of the traction battery 120, the control module 1120 controls the first leg 1111 and the second leg 1112 to form a loop via which the charging apparatus 140 charges the traction battery 120 and the energy storage element 1113 and a loop via which the energy storage element 1113 charges the traction battery 120.

In an implementation, as shown in FIG. 4, an example in which the energy storage element 1113 is the inductor L is used. A second terminal of the energy storage element 1113 is connected to one terminal of the charging apparatus 140 through a fifth tube switch V15; the second terminal E22 of the second leg 1112 is connected to another terminal of the charging apparatus 140; and the charging apparatus 140 is configured to charge the traction battery 120 via the battery heating apparatus 110. A capacitor C3 in FIG. 4 may be a capacitor of the charging apparatus 140, and can have, for example, a voltage stabilization function during charge.

In an implementation, the third tube switch V13 may alternatively be used as a mode switching switch. When the battery heating apparatus 110 is in the heating mode, the control module 1120 controls the third tube switch V13 to turn on; and when the battery heating apparatus 110 is in the charge mode, the control module 1120 controls the third tube switch V13 to turn off.

It should be understood that when the third tube switch V13 is used as the mode switching switch, the freewheeling diode D13 should not be connected to two terminals of the third tube switch V13. In this case, one heating period may include only the third stage and the fourth stage, that is, firstly, the second tube switch V12 and the third tube switch V13 turn on simultaneously to form a loop including the traction battery 120, the third tube switch V13, the inductor L, and the second tube switch V12 for the traction battery 120 to discharge to the inductor L; and secondly, the second tube switch V12 and the third tube switch V13 also turn off to form a loop including the traction battery 120, the fourth freewheeling diode D14, the inductor L, and the first freewheeling diode D 11 for the inductor L to charge the traction battery 120. In this case, the freewheeling diode D14 may alternatively not be connected to two terminals of the fourth tube switch V14.

Alternatively, in another implementation, as shown in FIG. 5, a sixth switch V16 may be connected between the first terminal E11 of the first leg 1111 and the first terminal E21 of the second leg 1112 to serve as a mode switching switch. In a heating mode, the sixth switch V16 turns on, and in a charge mode, the sixth switch V16 turns off.

When the battery heating apparatus 110 switches from the heating mode to the charge mode, the control module 1120 is further configured to: control the third sub-leg 1103, for example, the third tube switch V13 or the sixth tube switch V 16, to turn off; when the voltage of the charging apparatus 140 is lower than the voltage of the traction battery 120, control the second tube switch V12 and the fifth tube switch V15 to turn on and the first tube switch V11 and the fourth tube switch V14 to turn off, so as to form a loop including the charging apparatus 140, the energy storage element 1113, and the second tube switch V12 for the charging apparatus 140 to charge the energy storage element 1113; and control the first tube switch V11 and the fifth tube switch V15 to turn on and the second tube switch V12 and the fourth tube switch V14 to turn off, so as to form a loop including the charging apparatus 140, the energy storage element 1113, the first tube switch V11, and the traction battery 120 for the charging apparatus 140 and the energy storage element 1113 to charge the traction battery 120 simultaneously.

It can be seen that when the voltage of the charging apparatus 140 is lower than the voltage of the traction battery 120, proper control timing is designed to control the sub-legs to turn on or off, so as to form, in each charge period, a first stage in which the charging apparatus 140 charges the energy storage element 1113 and a second stage in which the charging apparatus 140 and the energy storage element 1113 charge the traction battery 120 simultaneously. In this way, in the first stage in which the charging apparatus 140 charges the energy storage element 1113, the energy storage element 1113 may store a specific amount of power. Therefore, the energy storage element 1113 can charge the traction battery 120 together with the charging apparatus 140 in the second stage, thereby reducing a voltage difference between the charging apparatus 140 and the traction battery 120 and improving charge efficiency.

Further, the control module 1120 is further configured to: when the voltage of the charging apparatus 140 is higher than the voltage of the traction battery 120, control the first tube switch V11 and the fifth tube switch V15 to turn on and the second tube switch V12 and the fourth tube switch V14 to turn off, so as to form a loop including the charging apparatus 140, the energy storage element 1113, the first tube switch V11, and the traction battery 120 for the charging apparatus 140 to charge the traction battery 120 and the energy storage element 1113; and control the first tube switch V11 to turn on and the second tube switch V12, the fourth tube switch V14, and the fifth tube switch V15 to turn off, so as to form a loop including the energy storage element 1113, the first tube switch V11, the traction battery 120, and the fourth freewheeling diode D14 for the energy storage element 1113 to charge the traction battery 120.

It can be seen that when the voltage of the charging apparatus 140 is higher than the voltage of the traction battery 120, proper control timing is designed to control the sub-legs to turn on or off, so as to form, in each charge period, a stage in which the charging apparatus 140 charges the energy storage element 1113 and the traction battery 120 and a stage in which only the energy storage element 1113 charges the traction battery 120. On the one hand, when the charging apparatus 140 charges the energy storage element 1113 and the traction battery 120, the energy storage element 1113 can absorb a part of voltage. Therefore, the voltage difference between the charging apparatus 140 and the traction battery 120 is appropriately reduced. On the other hand, because the voltage of the charging apparatus 140 is higher than the voltage of the traction battery 120, to prevent the charging apparatus 140 from persistently charging the traction battery 120 at high voltage, the charging apparatus 14 and the energy storage element 1113 can alternately charge the traction battery 120. When the charging apparatus 140 charges the energy storage element 1113 and the traction battery 120, the energy storage element 1113 can store a specific amount of power. Therefore, based on this amount of power, the energy storage element 1113 can charge the traction battery 120 alone.

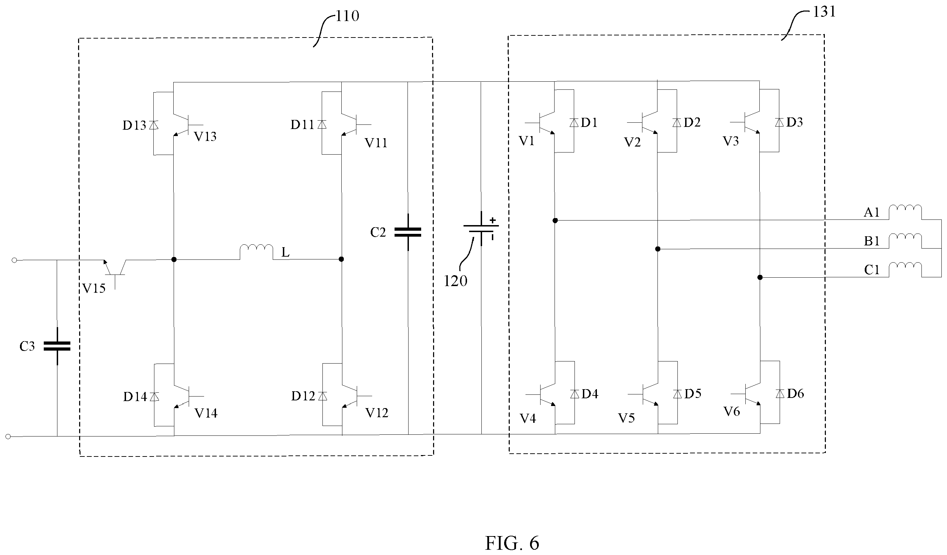

In an implementation, as shown in FIG. 6, the traction battery 120 is further connected to a drive circuit 131 of a motor and configured to supply power to the drive circuit 131. In FIG. 6, using a three-phase motor as an example, the drive circuit 131 of the three-phase motor is an inverter circuit, including a leg formed by a tube switch V1, a tube switch V2, a tube switch V3, a tube switch V4, a tube switch V5, and a tube switch V6 and is connected to a winding A1, a winding B 1, and a winding C1 of a motor 130.

It can be seen that when the battery heating apparatus 110 is configured to heat the traction battery 120, the traction battery 120 still can supply power to the drive circuit 131 of the motor connected to the traction battery 120, so as to heat the traction battery 120 in driving.

Based on the foregoing description, an additional battery heating apparatus 110 is provided, so that when the battery heating apparatus 110 is configured to heat the traction battery 120, a motor can drive a vehicle to run as normal, thereby implementing heating in driving. Specifically, proper control timing is designed to control the legs in the battery heating apparatus 110, so as to form a loop via which the traction battery 120 discharges to the energy storage element 1113 in the battery heating apparatus 110 and a loop via which the energy storage element 1113 charges the traction battery 120, thereby heating the traction battery by effectively using the energy storage element 1113.

When the charging apparatus 140 charges the traction battery 120 via the battery heating apparatus 110, the battery heating apparatus 110 enters the charge mode. In this case, because the battery heating apparatus 110 cannot be used for heating the traction battery 120, the drive circuit 131 of the motor can be used for heating the traction battery 120. Different from a method of heating the cooling liquid by using the heat produced due to operation loss of the motor, in this case, IGBTs in the drive circuit 131 can be controlled to form a charge/discharge loop, so as to heat the traction battery 120. For example, when the VCU receives the heating request sent by the BMS, and the battery heating apparatus 110 is in the charge mode, the VCU can inform the motor control unit to control the drive circuit 131 of the motor to heat the traction battery 120, for example, control the IGBTs including the tube switches V1 to V6 in the drive circuit 131 to heat the traction battery 120 via the drive circuit 131.

In other words, in addition to the foregoing heating mode and charge mode, the battery heating apparatus 110 may also have another mode, that is, a charging and heating mode. When the battery heating apparatus 110 is in the charging and heating mode, the charging apparatus 140 charges the traction 120 via the battery heating apparatus 110, and the drive circuit 131 of the motor can heat the traction battery 120.

In an implementation, a space vector pulse width modulation (Space Vector Pulse Width Modulation, SVPWM) method can be used for generating a control signal for tube switches of legs in the drive circuit 131, and the control signal is used for controlling an on/off state of the tube switches of the legs, so that a current flowing into a motor winding is modulated into an alternating current. For an example, a direct axis current component of the winding current can be controlled to be an alternating current, and a quadrature axis current component of the winding current is controlled to be 0, so as to modulate the current of the motor winding into the alternating current.

Any two phase currents ia and ib collected by a three-phase connection circuit between the drive circuit 131 and the motor are obtained. Any two phase currents ia and ib flow from the drive circuit 131 to the motor. The motor control unit converts the collected current from an abc coordinate system to a dq coordinate system, and then decomposes the collected current in the dq coordinate system to obtain a direct axis component id and a quadrature axis component iq. The quadrature axis component iq, the direct axis component id, a quadrature axis signal given value i_q^^{∗}, and a direct axis signal given value i_d^^{∗} are used for obtaining a modulation signal of a tube switch that needs to turn on. The quadrature axis signal given value i_q^^{∗} is equal to 0. In this way, energy stored in the motor winding can be used for implementing charge/discharge the traction battery 120.

Voltage fluctuation is caused in a process of heating the traction battery 120 by using the drive circuit 131 of the motor. However, due to the presence of the battery heating apparatus 110, the charging apparatus 140 outputs voltage to the traction battery 120 via the battery heating apparatus 110, so that dynamic regulation can be implemented with the voltage fluctuations in the battery heating process, thereby reducing impact of the battery heating process on the charging apparatus 140.

It should be understood that "connect" or "join" in the embodiments of this application may be a direct connection or an indirect connection. This is not limited in this application. For example, a connection between the first terminal E11 of the first leg 1111 and the first terminal E21 of the second leg 1112 may be, for example, a directly electrical connection between the first terminal E11 of the first leg 1111 and the first terminal E21 of the second leg 1112 shown in FIG. 3, or may alternatively be a connection between the first terminal E11 of the first leg 1111 and the first terminal E21 of the second leg 1112 via another element, for example, the tube switch V16 shown in FIG. 5.

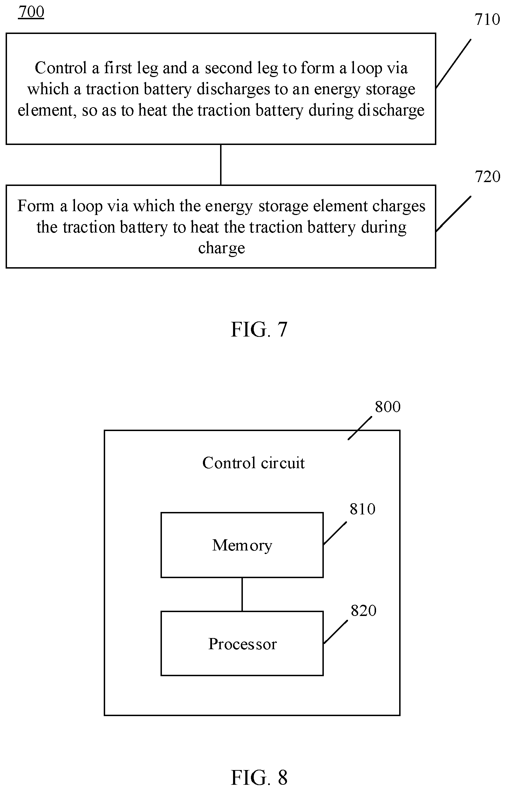

An embodiment of this application further provides a control method of battery heating apparatus. Herein, for the structure of the battery heating apparatus 110, refer to specific description for FIG. 1 to FIG. 5. Details are not described herein again. As shown in FIG. 7, a control method 700 of battery heating apparatus includes either or both of the following steps.

Step 710: Control the first leg and the second leg to form a loop via which the traction battery discharges to the energy storage element, so as to heat the traction battery during discharge.

Step 720: Form a loop via which the energy storage element charges the traction battery to heat the traction battery during charge.

Based on the foregoing technical solutions, proper control timing is designed to control two legs in the battery heating apparatus, so as to form a loop via which the traction battery discharges to the energy storage element and a loop via which the energy storage element charges the traction battery, thereby heating the traction battery during discharge and charge. When the battery heating apparatus is configured to heat the traction battery, a motor can drive a vehicle to run as normal, thereby implementing heating in driving.

In an implementation, the battery heating apparatus is further connected to a charging apparatus, and the charging apparatus is configured to charge the traction battery via the battery heating apparatus. The control method further includes: when voltage of the charging apparatus is lower than voltage of the traction battery, controlling the first leg and the second leg to form a loop via which the charging apparatus charges the energy storage element and a loop via which the charging apparatus and the energy storage element charge the traction battery simultaneously; or when voltage of the charging apparatus is higher than voltage of the traction battery, controlling the first leg and the second leg to form a loop via which the charging apparatus charges the traction battery and the energy storage element and a loop via which the energy storage element charges the traction battery.

In an implementation, a first terminal of the first leg, a first terminal of the second leg, and a first terminal of the traction battery are connected; and a second terminal of the first leg, a second terminal of the second leg, and a second terminal of the traction battery are connected. The first leg includes a first sub-leg and a second sub-leg, and the second leg includes a third sub-leg and a fourth sub-leg. A first terminal of the energy storage element is connected between the first sub-leg and the second sub-leg, and a second terminal of the energy storage element is connected between the third sub-leg and the fourth sub-leg.

In an implementation, the first sub-leg includes a first tube switch and a first freewheeling diode connected in parallel to the first tube switch; the second sub-leg includes a second tube switch and a second freewheeling diode connected in parallel to the second tube switch; the third sub-leg includes a third tube switch and a third freewheeling diode connected in parallel to the third tube switch; and the fourth sub-leg includes a fourth tube switch and a fourth freewheeling diode connected in parallel to the fourth tube switch.

In an implementation, the controlling the first leg, the second leg, and the traction battery includes: receiving a heating request message; and generating a first control signal according to the heating request message, where the first control signal is used to:
control the first tube switch and the fourth tube switch to turn on and the second tube switch and the third tube switch to turn off, so as to form a loop including the traction battery, the first tube switch, the energy storage element, and the fourth tube switch for the traction battery to discharge to the energy storage element; and control the first tube switch, the second tube switch, the third tube switch, and the fourth tube switch to turn off, so as to form a loop including the traction battery, the second freewheeling diode, the energy storage element, and the third freewheeling diode for the energy storage element to charge the traction battery; and/or
control the second tube switch and the third tube switch to turn on and the first tube switch and the fourth tube switch to turn off, so as to form a loop including the traction battery, the third tube switch, the energy storage element, and the second tube switch for the traction battery to discharge to the energy storage element; and control the first tube switch, the second tube switch, the third tube switch, and the fourth tube switch to turn off, so as to form a loop including the traction battery, the fourth freewheeling diode, the energy storage element, and the first freewheeling diode for the energy storage element to charge the traction battery.

In a possible implementation, the control method further includes: receiving a heating stopping message; and generating a second control signal according to the heating stopping message, where the second control signal is used to control the battery heating apparatus to stop heating the traction battery.

In an implementation, the second terminal of the energy storage element is connected to one terminal of the charging apparatus through a fifth tube switch, the second terminal of the second leg is connected to another terminal of the charging apparatus, and the charging apparatus is configured to charge the traction battery via the heating module. The controlling the first leg, the second leg, and the traction battery further includes: controlling the third sub-leg to turn off; when voltage of the charging apparatus is lower than voltage of the traction battery, controlling the second tube switch and the fifth tube switch to turn on and the first tube switch and the fourth tube switch to turn off, so as to form a loop that includes the charging apparatus, the energy storage element, and the second tube switch and that is used by the charging apparatus to charge the energy storage element; and controlling the first tube switch and the fifth tube switch to turn on and the second tube switch and the fourth tube switch to turn off, so as to form a loop that includes the charging apparatus, the energy storage element, the first tube switch, and the traction battery and that is used by the charging apparatus and the energy storage element to charge the traction battery simultaneously.

In an implementation, the controlling the first leg, the second leg, and the traction battery further includes: when voltage of the charging apparatus is higher than voltage of the traction battery, controlling the first tube switch and the fifth tube switch to turn on and the second tube switch and the fourth tube switch to turn off, so as to form a loop that includes the charging apparatus, the energy storage element, the first tube switch, and the traction battery and that is used by the charging apparatus to charge the traction battery and the energy storage element; and controlling the first tube switch to turn on and the second tube switch, the fourth tube switch, and the fifth tube switch to turn off, so as to form a loop that includes the energy storage element, the first tube switch, the traction battery, and the fourth freewheeling diode and that is used by the energy storage element to charge the traction battery.

In an implementation, the energy storage element includes an inductor; or the energy storage element includes an inductor and a first capacitor connected in series.

In an implementation, a second capacitor is further connected in parallel to two terminals of the traction battery.

In an implementation, the traction battery is further connected to a drive circuit of a motor and configured to supply power to the drive circuit.

It should be understood that for the specific control of the legs in the method embodiments and the resulting beneficial effects, reference may be made to the corresponding descriptions in the foregoing apparatus embodiments. For brevity, details are not described herein again.

FIG. 8 is a schematic block diagram of a control circuit 800 of battery heating apparatus according to an embodiment of this application. As shown in FIG. 8, the control circuit 800 includes a processor 820; optionally, the control circuit 800 further includes a memory 810, where the memory 810 is configured to store instructions; and the processor 820 is configured to read the instructions and perform the method in the foregoing embodiments of this application based on the instructions.

For example, the processor 820 may correspond to the control module of any one of the foregoing battery heating apparatuses.

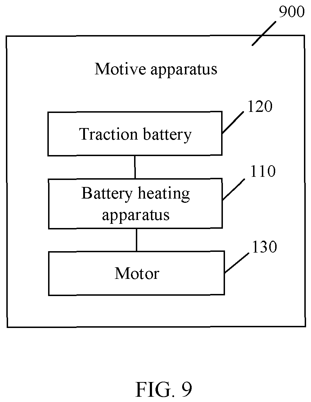

FIG. 9 is a schematic block diagram of a motive apparatus 900 according to an embodiment of this application. The motive apparatus 900 includes: a traction battery 120; the battery heating apparatus 110 in any one of the foregoing embodiments, where the battery heating apparatus 110 is connected to the traction battery 120 and configured to heat the traction battery 120; and a motor 130, where a drive circuit 131 of the motor 130 is connected to the traction battery 120, and the traction battery 120 is configured to supply power to the drive circuit 131.

For example, the motive apparatus 900 may be a motorized vehicle.

An embodiment of this application further provides a readable storage medium, where the readable storage medium is configured to store a computer program, and the computer program is used to perform the method in the foregoing embodiments of this application.

Persons of ordinary skill in the art will appreciate that the units and algorithm steps of various examples described with reference to the embodiments disclosed in this specification can be implemented by using electronic hardware or a combination of computer software and electronic hardware. Whether the functions are executed by hardware or software depends on particular applications and design constraints of the technical solutions. Persons skilled in the art can employ a different method to implement the described functions for each particular application, but such implementations shall not be construed as going beyond the scope of this application.

It will be clearly understood by persons skilled in the art that, for ease and brevity of description, for a detailed operating process of the foregoing system, apparatus, or unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiments are merely illustrative. For example, the unit division is merely logical function division and other division manners may be used in actual implementation. For example, a plurality of units or components may be combined or integrated into another system, or some features may be ignored or not be performed. In addition, the displayed or discussed mutual couplings, direct couplings or communication connections may be indirect couplings or communication connections through some interfaces, apparatuses or units, and may be in electrical, mechanical, or other forms.

The units described as separate parts may or may not be physically separated. Parts displayed as units may or may not be physical units, meaning they may be located in one position or distributed on a plurality of network units. Some or all of the units may be selected depending on actual requirements to achieve the objectives of the solutions of the embodiments.

In addition, function units in the embodiments of this application may be integrated into one processing unit, or each of the units may exist alone physically, or two or more units may be integrated into one unit.

When realized in form of software functional unit and sold or used as an independent product, the function may also be stored in a computer-readable storage medium. Based on such understanding, the technical solutions of the application substantially or parts making contributions to the prior art or part of the technical solutions may be embodied in form of software product. The computer software product is stored in a storage medium and includes a plurality of instructions used to enable a computer device which may be, for example, a personal computer, a server, or a network device to perform all or some of the steps of the method in the embodiments of the application. The foregoing storage medium includes various media capable of storing program code, such as a USB flash drive, a removable hard disk, a read-only memory (Read-Only Memory, ROM), a random access memory (Random Access Memory, RAM), a magnetic disk, or an optical disc.

The foregoing descriptions are merely specific embodiments of this application, but are not intended to limit the protection scope of this application. Any variation or replacement readily figured out by persons skilled in the art within the technical scope disclosed in this application shall fall within the protection scope of this application. Therefore, the protection scope of this application shall be subject to the protection scope of the claims.

## Claims

1. A battery heating apparatus configured to be connected to a traction battery and heat the traction battery, **characterized in that** the battery heating apparatus comprises:
a heating module comprising a first leg, a second leg, and an energy storage element; and
a control module configured to control the first leg and the second leg to form a loop via which the traction battery discharges to the energy storage element and a loop via which the energy storage element charges the traction battery, so as to heat the traction battery during discharge and charge.

2. The battery heating apparatus according to claim 1, **characterized in that** the battery heating apparatus is further connected to a charging apparatus, and the charging apparatus is configured to charge the traction battery via the battery heating apparatus; and the control module is further configured to:
when voltage of the charging apparatus is lower than voltage of the traction battery, control the first leg and the second leg to form a loop via which the charging apparatus charges the energy storage element and a loop via which the charging apparatus and the energy storage element charge the traction battery simultaneously; or
when voltage of the charging apparatus is higher than voltage of the traction battery, control the first leg and the second leg to form a loop via which the charging apparatus charges the traction battery and the energy storage element and a loop via which the energy storage element charges the traction battery.

3. The battery heating apparatus according to claim 1 or 2, **characterized in that**
a first terminal of the first leg, a first terminal of the second leg, and a first terminal of the traction battery are connected, and a second terminal of the first leg, a second terminal of the second leg, and a second terminal of the traction battery are connected; and
the first leg comprises a first sub-leg and a second sub-leg, the second leg comprises a third sub-leg and a fourth sub-leg, a first terminal of the energy storage element is connected between the first sub-leg and the second sub-leg, and a second terminal of the energy storage element is connected between the third sub-leg and the fourth sub-leg.

4. The battery heating apparatus according to claim 3, **characterized in that**
the first sub-leg comprises a first tube switch and a first freewheeling diode connected in parallel to the first tube switch;
the second sub-leg comprises a second tube switch and a second freewheeling diode connected in parallel to the second tube switch;
the third sub-leg comprises a third tube switch and a third freewheeling diode connected in parallel to the third tube switch; and
the fourth sub-leg comprises a fourth tube switch and a fourth freewheeling diode connected in parallel to the fourth tube switch.

5. The battery heating apparatus according to claim 4, **characterized in that** the control module is specifically configured to:
control the first tube switch and the fourth tube switch to turn on and the second tube switch and the third tube switch to turn off, so as to form a loop comprising the traction battery, the first tube switch, the energy storage element, and the fourth tube switch for the traction battery to discharge to the energy storage element;
control the first tube switch, the second tube switch, the third tube switch, and the fourth tube switch to turn off, so as to form a loop comprising the traction battery, the second freewheeling diode, the energy storage element, and the third freewheeling diode for the energy storage element to charge the traction battery;
and/or
control the second tube switch and the third tube switch to turn on and the first tube switch and the fourth tube switch to turn off, so as to form a loop comprising the traction battery, the third tube switch, the energy storage element, and the second tube switch for the traction battery to discharge to the energy storage element; and
control the first tube switch, the second tube switch, the third tube switch, and the fourth tube switch to turn off, so as to form a loop comprising the traction battery, the fourth freewheeling diode, the energy storage element, and the first freewheeling diode for the energy storage element to charge the traction battery.

6. The battery heating apparatus according to claim 5, **characterized in that** the second terminal of the energy storage element is connected to one terminal of the charging apparatus through a fifth tube switch, the second terminal of the second leg is connected to another terminal of the charging apparatus, and the charging apparatus is configured to charge the traction battery via the heating module; and the control module is further configured to:
control the third sub-leg to turn off;
when voltage of the charging apparatus is lower than voltage of the traction battery, control the second tube switch and the fifth tube switch to turn on and the first tube switch and the fourth tube switch to turn off, so as to form a loop comprising the charging apparatus, the energy storage element, and the second tube switch for the charging apparatus to charge the energy storage element; and
control the first tube switch and the fifth tube switch to turn on and the second tube switch and the fourth tube switch to turn off, so as to form a loop comprising the charging apparatus, the energy storage element, the first tube switch, and the traction battery for the charging apparatus and the energy storage element to charge the traction battery simultaneously.

7. The battery heating apparatus according to claim 6, **characterized in that** the control module is further configured to:
when voltage of the charging apparatus is lower than voltage of the traction battery, control the first tube switch and the fifth tube switch to turn on and the second tube switch and the fourth tube switch to turn off, so as to form a loop comprising the charging apparatus, the energy storage element, the first tube switch, and the traction battery for the charging apparatus to charge the traction battery and the energy storage element; and
control the first tube switch to turn on and the second tube switch, the fourth tube switch, and the fifth tube switch to turn off, so as to form a loop comprising the energy storage element, the first tube switch, the traction battery, and the fourth freewheeling diode for the energy storage element to charge the traction battery.

8. The battery heating apparatus according to any one of claims 1 to 7, **characterized in that**
the energy storage element comprises an inductor; or
the energy storage element comprises an inductor and a first capacitor connected in series.

9. The battery heating apparatus according to any one of claims 1 to 8, **characterized in that** a second capacitor is further connected in parallel to two terminals of the traction battery.

10. The battery heating apparatus according to claims 1 to 9, **characterized in that** the traction battery is further connected to a drive circuit of a motor and configured to supply power to the drive circuit.

11. A control method of battery heating apparatus, **characterized in that** the battery heating apparatus is connected to a traction battery and configured to heat the traction battery, and the battery heating apparatus comprises a first leg, a second leg, and an energy storage element; and the control method comprises:
controlling the first leg and the second leg to form a loop via which the traction battery discharges to the energy storage element and a loop via which the energy storage element charges the traction battery, so as to heat the traction battery during discharge and charge.

12. The control method according to claim 11, **characterized in that** the battery heating apparatus is further connected to a charging apparatus, and the charging apparatus is configured to charge the traction battery via the battery heating apparatus; and the control method further comprises:
when voltage of the charging apparatus is lower than voltage of the traction battery, controlling the first leg and the second leg to form a loop via which the charging apparatus charges the energy storage element and a loop via which the charging apparatus and the energy storage element charge the traction battery simultaneously; or
when voltage of the charging apparatus is higher than voltage of the traction battery, controlling the first leg and the second leg to form a loop via which the charging apparatus charges the traction battery and the energy storage element and a loop via which the energy storage element charges the traction battery.

13. The control method according to claim 11 or 12, **characterized in that**
a first terminal of the first leg, a first terminal of the second leg, and a first terminal of the traction battery are connected, and a second terminal of the first leg, a second terminal of the second leg, and a second terminal of the traction battery are connected; and
the first leg comprises a first sub-leg and a second sub-leg, the second leg comprises a third sub-leg and a fourth sub-leg, a first terminal of the energy storage element is connected between the first sub-leg and the second sub-leg, and a second terminal of the energy storage element is connected between the third sub-leg and the fourth sub-leg; and
the first sub-leg comprises a first tube switch and a first freewheeling diode connected in parallel to the first tube switch, the second sub-leg comprises a second tube switch and a second freewheeling diode connected in parallel to the second tube switch, the third sub-leg comprises a third tube switch and a third freewheeling diode connected in parallel to the third tube switch, and the fourth sub-leg comprises a fourth tube switch and a fourth freewheeling diode connected in parallel to the fourth tube switch.

14. The control method according to claim 13, **characterized in that** the controlling the first leg, the second leg, and the traction battery comprises:
receiving a heating request message; and
generating a first control signal according to the heating request message, wherein the first control signal is used to:
control the first tube switch and the fourth tube switch to turn on and the second tube switch and the third tube switch to turn off, so as to form a loop comprising the traction battery, the first tube switch, the energy storage element, and the fourth tube switch for the traction battery to discharge to the energy storage element;
control the first tube switch, the second tube switch, the third tube switch, and the fourth tube switch to turn off, so as to form a loop comprising the traction battery, the second freewheeling diode, the energy storage element, and the third freewheeling diode for the energy storage element to charge the traction battery;
and/or
control the second tube switch and the third tube switch to turn on and the first tube switch and the fourth tube switch to turn off, so as to form a loop comprising the traction battery, the third tube switch, the energy storage element, and the second tube switch for the traction battery to discharge to the energy storage element; and
control the first tube switch, the second tube switch, the third tube switch, and the fourth tube switch to turn off, so as to form a loop comprising the traction battery, the fourth freewheeling diode, the energy storage element, and the first freewheeling diode for the energy storage element to charge the traction battery.

15. The control method according to claim 14, **characterized in that** the control method further comprises:
receiving a heating stopping message; and
generating a second control signal according to the heating stopping message, wherein the second control signal is used to control the battery heating apparatus to stop heating the traction battery.

16. The control method according to claim 14 or 15, **characterized in that** the second terminal of the energy storage element is connected to one terminal of the charging apparatus through a fifth tube switch, the second terminal of the second leg is connected to another terminal of the charging apparatus, and the charging apparatus is configured to charge the traction battery via the heating module; and the controlling the first leg, the second leg, and the traction battery further comprises:
control the third sub-leg to turn off;
when voltage of the charging apparatus is lower than voltage of the traction battery, control the second tube switch and the fifth tube switch to turn on and the first tube switch and the fourth tube switch to turn off, so as to form a loop comprising the charging apparatus, the energy storage element, and the second tube switch for the charging apparatus to charge the energy storage element; and
control the first tube switch and the fifth tube switch to turn on and the second tube switch and the fourth tube switch to turn off, so as to form a loop comprising the charging apparatus, the energy storage element, the first tube switch, and the traction battery for the charging apparatus and the energy storage element to charge the traction battery simultaneously.

17. The control method according to claim 16, **characterized in that** the controlling the first leg, the second leg, and the traction battery further comprises:
when voltage of the charging apparatus is lower than voltage of the traction battery, control the first tube switch and the fifth tube switch to turn on and the second tube switch and the fourth tube switch to turn off, so as to form a loop comprising the charging apparatus, the energy storage element, the first tube switch, and the traction battery for the charging apparatus to charge the traction battery and the energy storage element; and
control the first tube switch to turn on and the second tube switch, the fourth tube switch, and the fifth tube switch to turn off, so as to form a loop comprising the energy storage element, the first tube switch, the traction battery, and the fourth freewheeling diode for the energy storage element to charge the traction battery.

18. The control method according to any one of claims 11 to 17, **characterized in that**
the energy storage element comprises an inductor; or
the energy storage element comprises an inductor and a first capacitor connected in series.

19. The control method according to any one of claims 11 to 18, **characterized in that** a second capacitor is further connected in parallel to two terminals of the traction battery.

20. The control method according to claims 11 to 19, **characterized in that** the traction battery is further connected to a drive circuit of a motor and configured to supply power to the drive circuit.

21. A control circuit of battery heating apparatus, **characterized by** comprising a processor, wherein the processor is configured to perform the control method according to any one of claims 11 to 20.

22. A motive apparatus, **characterized by** comprising:
a traction battery;
the battery heating apparatus according to any one of claims 1 to 10, connected to the traction battery and configured to heat the traction battery; and
a motor, wherein a drive circuit of the motor is connected to the traction battery, and the traction battery is configured to supply power to the drive circuit.
